(19)

Europäisches
Patentamt
European
Patent Office
Office européen
des brevets

(11) **EP 1 821 298 A2**

(12) # EUROPEAN PATENT APPLICATION

(43) Date of publication:
**22.08.2007 Bulletin 2007/34**

(51) Int Cl.:
**G11B 7/125** (2006.01) **G11B 7/0055** (2006.01)

(21) Application number: **06077338.9**

(22) Date of filing: **29.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **21.02.2006 KR 20060016951**

(71) Applicant: **Samsung Electronics Co., Ltd.**
**Yeongtong-gu**
**Suwon-si, Gyeonggi-do (KR)**

(72) Inventor: **Yu, Jin Woo**
**Yeongtong-gu**
**Suwon-si**
**Gyeonggi-do (KR)**

(74) Representative: **Hylarides, Paul Jacques et al**
**Arnold & Siedsma**
**Sweelinckplein 1**
**2517 GK The Hague (NL)**

(54) **Method to determine optimum erase power in optical disc apparatus**

(57)     A method to determine an optimal erase power in an optical disc apparatus detects optimal erase power in an erasing operation before performing an optimum power calibration (OPC) for detecting optimal recording power of an optical disc, and includes: acquiring a power-to-modulation curve, in which applied power is changed to adjust an amount of light which is incident on the optical disc; calculating an amount of change of modulation according to the change of the power in the power-to-modulation curve; and setting the optimal erase power using the calculated change amount of the modulation. Therefore, a part to have the OPC performed is erased by the optimal erase power and then the OPC is performed such that an OPC performance result having a relatively high reliability can be obtained.

FIG. 2

```
                    ┌─────────┐
                    │  start  │
                    └─────────┘
                         │
S210 ──  input 'record start command'
                         │
S220 ──  search PCA area
                         │
S230 ──  record test data with change of power
                         │
S240 ──  calculate modulation curve with respect to power
                         │
S250 ──  search power at point on calculated modulation curve,
         in which modulation curve is steep
                         │
S260 ──  calculate optimal DC eraser power   [erase]
                         │
S270 ──  perform OPC after erasing PCA area
                         │
S280 ──  set optimal power of OPC
                         │
S290 ──  start record
                         │
                    ┌─────────┐
                    │   end   │
                    └─────────┘
```

EP 1 821 298 A2

## Description

### BACKGROUND OF THE INVENTION

#### 1. Field of the Invention

Aspects of the present invention relate to a power control method in an optical disc apparatus, and, more particularly, to a method to determine an optimal erase power in an optical disc apparatus, which is capable of determining the optimal erase power by having data recorded in a certain part of an optical disc erased before the optical disc apparatus performs optimum power calibration (OPC) used to detect the optimal recording power when the optical disc is inserted thereto.

#### 2. Description of the Related Art

Generally, an optical device serves to record/play back various information in/from an optical disc using a laser. Optical disc devices are widely used to record/read a variety of large amounts of information on optical discs such as a compact disc (CD), a digital versatile disc (DVD), a Blu-ray disc, an HD-DVD, etc.

Such optical discs are classified into non-recordable optical discs, such as a CD-ROM, a DVD-ROM, etc., once-recordable optical discs which are capable of having data recorded therein only once, such as a CD-R, a DVD-R, etc., and re-recordable optical discs which are capable of having data recorded therein many times, such as a CD-RW, a DVD-RW, a DVD-RAM, etc.

The recordable optical discs are divided into once-recordable optical discs, such as a CD-R, a DVD-R, whose recording layer is coated with an organic dye, and re-recordable optical discs, such as a CD-RW, a DVD-RW, a DVD-RAM, etc., whose recording layer is coated with a phase change material. The once-recordable optical discs, such as a CD-R, record data therein by having organic dyes in their recording layers changed chemically by a laser beam to form marks on predetermined areas. Therefore, as data is recorded as marks, the marked area cannot be re-recorded with data. The re-recordable optical discs, such as a CD-RW, record data therein by having a laser beam be incident on a certain part of the phase change materials in the recoding layer. Such a laser beam increases the temperature of the part to a melting point (typically about 500~700°C) of the phase change materials, thereby changing the state of the part into an unstable liquid state. Afterwards, the part decreases in temperature, thereby changing the unstable liquid state of the part into an amorphous solid state. Generally, a refractive index of an amorphous state is smaller than that of a crystal state resulting in differences in the refractivities of the optical disc. Therefore, using the difference, data can be recorded in the optical disc. Also, when the temperature of the phase change material is raised to approximately 200°C and held at the temperature for a relatively long time, the phase change material is changed back into a crystal state. Therefore, power applied to a laser diode to perform data erasing is smaller than that applied to the laser to perform data recording, as a general rule.

Although many may consider the various types of the recordable optical discs, such as a Blu-ray disc, an HD-DVD, etc., to be equivalents within the same type, the phase change materials in the recording layers of the various types of the recordable optical discs are different according to their manufacturers. Also, various factors applicable to the recordable optical discs, such as recording speed, recording device, etc., affect recording power and erase power. Therefore, when the recordable optical disc is inserted into an optical disc device, optimum power calibration (OPC) for detecting an optimal recording power for the inserted recordable optical disc is performed before a user's recording command causes data to be recorded in the recordable optical disc. The OPC is performed in a power calibration area (PCA) which is a test area allocated on the optical disc to detect the optimal recording power.

In order to perform the OPC, firstly, an optical pick-up is moved into the PCA used as the test area of an optical disc. After that, a test data is recorded in the PCA with a recording power whose magnitude is varied by a certain amount with reference to a certain power appropriate for the optical disc. The test data is recorded in the PCA typically by a recording power of 15 steps for 15 frames per a single OPC operation. After completing recording of the test data, the recorded test data is played back and an optimal recording power is detected from the playback characteristics of the test data.

The conventional optimal power detection method for optical discs has been disclosed in Korean Patent Publication No. 2005-22830. According to the publication, an optimal recording power is detected by using information defined according to each disc manufacturer, using the information to record test data in a corresponding optical disc, changing the recording power by a certain magnitude with respect to the obtained optimal recording power information, then re-detecting the optimal recording power.

As such, when recordings have been performed many times, a portion where data is not recorded, and portions where arbitrary data are recorded, etc., come to coexist in the PCA. The OPC performed in such a PCA results in relatively large deviations. Therefore, the conventional optimal power detection method has problems and the recording power detected after performing the OPC cannot be optimal.

Also, although even if the area to perform the OPC is erased before performing the OPC, since the area must be erased by an erase power determined by multiplying a maximum power provided by each manufacturer by a certain ratio, the conventional method is not optimized for a particular optical disc device and an optical disc combination. Accordingly, the result of the OPC cannot be optimal.

## SUMMARY OF THE INVENTION

Therefore, it is an aspect of the invention to provide a method to determine an optimal erase power in an optical disc apparatus, which is capable of determining the optimal erase power in a corresponding optical disc such that an area to perform an optimum power calibration (OPC) can be optimally erased before performing the OPC in order to enhance reliability of an OPC performance result.

In accordance with an aspect of the invention, the above and/or other aspects can be achieved by the provision of a method to determine an optimal erase power in an optical disc apparatus in an erasing operation) before performing optimum power calibration (OPC) for detecting an optimal recording power of an optical disc, the method including: acquiring a power-to-modulation curve, in which applied power is changed to adjust an amount of light which is incident on the optical disc; calculating an amount of change of modulation according to the change of the power in the power-to-modulation curve; and setting the optimal erase power using the calculated change amount of the modulation.

Preferably, the acquiring operation further includes recording a test data in a certain part of the optical disc. Here, the power-to-modulation curve is acquired as the recorded test data is played back.

Preferably, the test data is recorded in the certain part of the optical disc while the applied power is sequentially changed by a certain amount.

Preferably, the certain part of the optical disc is a power calibration area (PCA) formed on the optical disc.

Preferably, the setting operation sets the optimal erase power as a power at a portion of the power-to-modulation curve which immediately precedes a portion where an amount of change of modulation is the largest.

Preferably, the portion, where the amount of change of modulation is the largest is a portion where an amount of change of modulation has the largest increase in the power-to-modulation curve. Here, the optimal erase power is set in the power range between a power which immediately precedes the portion where the amount of change of modulation is the largest and a power, which is obtained by multiplying the power that precedes the portion by a predetermined coefficient.

In accordance with another aspect of the invention, there is provided a method to determine an optimal erase power in an optical disc apparatus in an erasing operation before performing optimum power calibration (OPC) for detecting an optimal recording power of an optical disc, the method including: recording a test data on a certain part of the optical disc; detecting a power applied to a laser diode at a time point when the test data starts to be recorded on the certain part of the optical disc; setting a certain range including the detected power as the optimal erase power.

Preferably, the test data is recorded as the applied power of the laser diode is changed.

Preferably, the power at a point when the test data starts to be recorded on the certain part of the optical disc is detected using a power-to-modulation curve.

Preferably, the certain part of the optical disc is a power calibration area (PCA) formed on the optical disc.

Preferably, the power at a point when the test data starts to be recorded on the certain part of the optical disc is a power at a portion which immediately precedes a portion where a slope of power-to-modulation curve is steeply changed.

Preferably, the certain range including the detected power is between the detected power and a power which is obtained by multiplying the detected by a predetermined coefficient.

In accordance with another aspect of the present invention, a method to determine an optimal erase power in an optical disc apparatus includes: obtaining a power-to-modulation relation by changing an applied power and detecting a resultant modulation; and setting an optimal erase power based on the obtained power-to-modulation relation.

In accordance with another aspect of the present invention, a method to determine an optimal erase power for an optical disc using an optical disc apparatus, includes: setting an optimal erase power based on an obtained power-to-modulation relation; and setting an optimal erase power based on an obtained power-to-modulation relation; and prior to performing an optimal power calibration (OPC), erasing a portion of the optical disc where the optimal power calibration (OPC) is to be performed using the set optimal erase power to increase the reliability of the OPC result.

Additional aspects and/or advantages of the invention will be set forth in part in the description which follows and, in part, will be obvious from the description, or may be learned by practice of the invention.

## BRIEF DESCRIPTION OF THE DRAWINGS

These and/or other aspects and advantages of the invention will become apparent and more readily appreciated from the following description of the embodiments, taken in conjunction with the accompanying drawings of which:

> FIG. 1 is a block diagram illustrating a general optical disc apparatus;
> FIG. 2 is a flow chart describing a method for performing OPC, as the optimal erase power is set in an optical disc apparatus according to an aspect of the present invention,;
> FIG. 3A is a graph of a first modulation curve for setting an optimal erase power of an optical disc apparatus according to an aspect of the present invention;
> FIG. 3B is a graph of a first OPC deviation curve according to the erase power of FIG. 3A;

FIG 4A is a graph of a second modulation curve for setting an optimal erase power of an optical disc apparatus according to an aspect of the present invention;

FIG 4B is a graph of a second OPC deviation curve according to the erase power of FIG. 4A;

FIG. 5A is a graph of a third modulation curve for setting an optimal erase power of an optical disc apparatus according to an aspect of the present invention; and

FIG 5B is a graph of a third OPC deviation curve according to the erase power of FIG. 5A.

DETAILED DESCRIPTION OF THE EMBODIMENTS

Reference will now be made in detail to the aspects of the present invention, examples of which are illustrated in the accompanying drawings, wherein like reference numerals refer to the like elements throughout. The aspects are described below to describe the aspects of the present invention by referring to the figures.

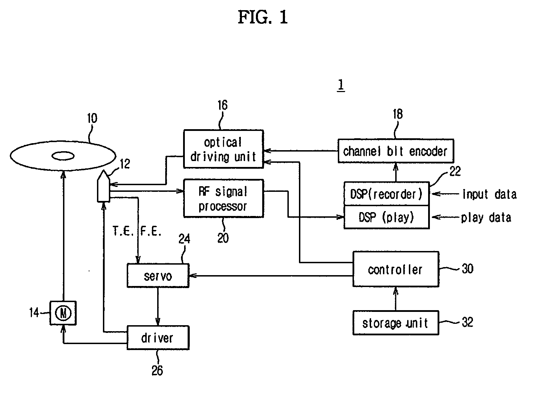

FIG. 1 is a block diagram illustrating a general optical disc apparatus 1. The optical disc apparatus 1 includes a digital signal processor (DSP) 22, a channel bit encoder 18, an optical driving unit 16, an optical pick-up 12, and an RF signal processor 20. Also, the optical disc apparatus 1 further includes a driver 26 for driving the optical pick-up 12 and a spindle motor 14, a servo 24 for controlling operation of the driver 26, a storage unit 32 storing various data, and a controller 30 for controlling the entire operations of the optical disc apparatus 1 and recording operations including OPC operations.

The digital signal processor (DSP) 22 includes a digital record signal processor (DSP record), which adds error correction code (ECC), etc., to the input digital data to convert the input digital data into data in a record format, and a digital playback signal processor (DSP playback), which restores original data from received binary signals based on a clock signal whose phase is synchronous to a binary signal of the RF signal processor 20.

The channel bit encoder 18 reconverts the data in the record format, which is output from the digital record signal processor 22, into bit-streams to output the data to the optical driving unit 16.

The optical driving unit 16 outputs light amount signals based on the input signals to a laser diode of the optical pick-up 12.

The optical pick-up 12 records data to the optical disc 10 according to the input light amount signals, and detects a reflected laser from a recording surface of the optical disc 10 to output corresponding data signals to the RF signal processor 20.

The RF signal processor 20 rectifies the signals detected in the optical pick-up 12 to output binary signals. The servo 24 controls operations of the driver 26 on the basis of a tracking error signal (TE), a focusing error signal (FE) of the optical pick-up 12, and a rotation speed of the optical disc 10.

The controller 30 controls the entire operations of the optical disc apparatus 1 including the optical driving unit 16 and the servo 24. More specifically, when a new optical disc 10, for example, is inserted into the optical disc apparatus, the controller 30 stores information related to the inserted optical disc 10 in the storage unit 32. Prior to being stored, the information is acquired as the controller 30 reads data in a lead-in area of the disc 10. Also, when a command to record data to the inserted optical disc 10 is input, the controller 30 controls the OPC operations to acquire optimal recording power for the corresponding optical disc such as 10. As described above, the controller 30 controls the optical disc apparatus 1. to: move the optical pick-up 12 to a location corresponding to the PCA to perform the OPC; sequentially increase a recording power by a certain amount when a test data is recorded; play back the recorded data when recording of the test data is completed; set an optimal recording power based on the playback characteristics; and then record the data in the optical disc 10.

When an inserted optical disc 10 is a recordable optical disc such as a Blu-ray disc, etc., on which numerous recording has been performed, the PCA may not have a non-recorded portion or the PCA may have a mixed portion where arbitrary data is partially recorded, etc. When the OPC is performed on the PCA in such a disc, reliability of the detected recording power is decreased. Therefore, it is preferable to erase a portion of the disc where OPC is to be performed, prior to performing the OPC to increase the reliability of the OPC result. Also, although there may be a PCA in which data is not recorded, it is preferable to perform erasing of the PCA because such will harmonize a portion of the recording layer upon which to perform OPC. In other words, the portion of the recording layer is made uniform. Therefore, the optimal recording power for the optical disc can be detected.

In addition, there may be situations where, although disc information of an optical disc includes information related to erase power, etc., provided by an optical disc manufacturer, the information is generic without regard to various different optical disc apparatuses and optical discs combinations. Therefore, each optical disc apparatus may not be operated with the optimal erase power for the optical disc.

Accordingly, the following is a description of a method to determine optimal erase power in an optical disc apparatus according to an aspect of the present invention. In the aspect, the optimal OPC performance result can be acquired by determining an optimal erase power using a power-to-modulation curve.

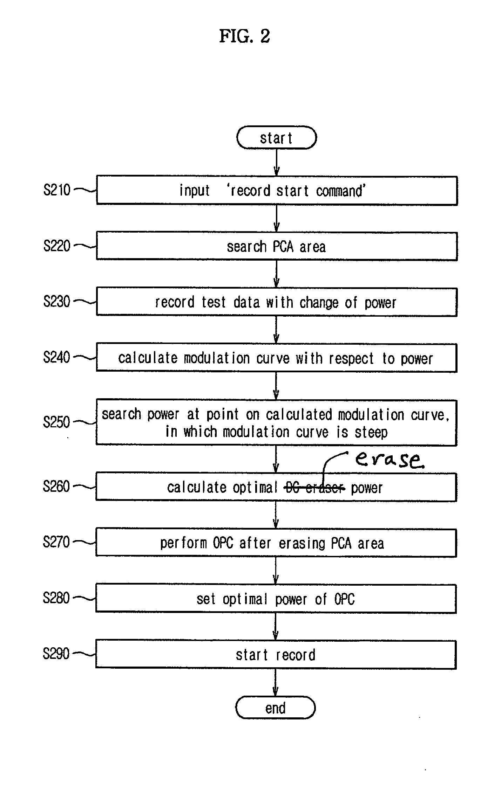

FIG. 2 is a flow chart describing a method for performing an OPC operation resulting from setting of an optimal erase power of the optical disc apparatus, according to an aspect of the present invention,. The method to determine the optimal erase power in an optical disc apparatus according to aspects of the present invention will be described in detail with reference to FIGS.

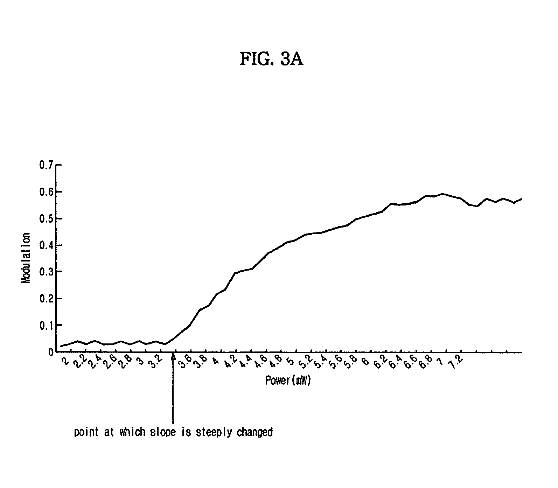

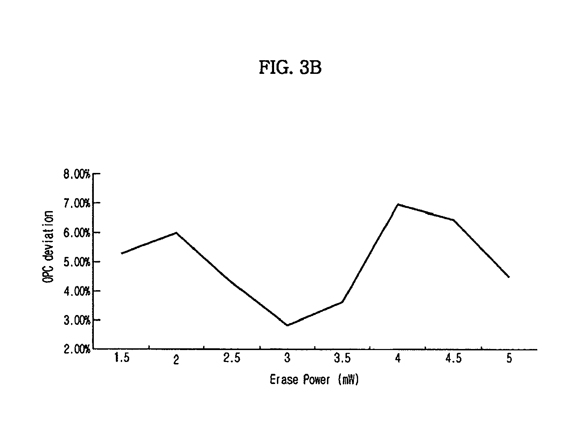

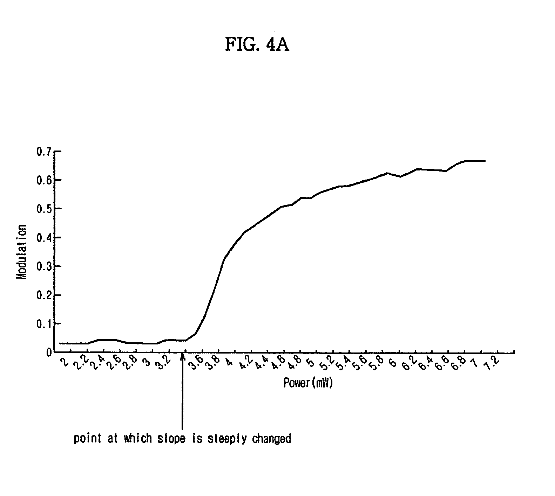

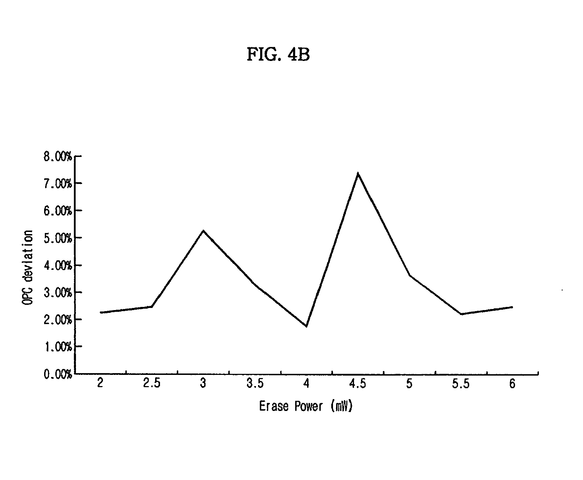

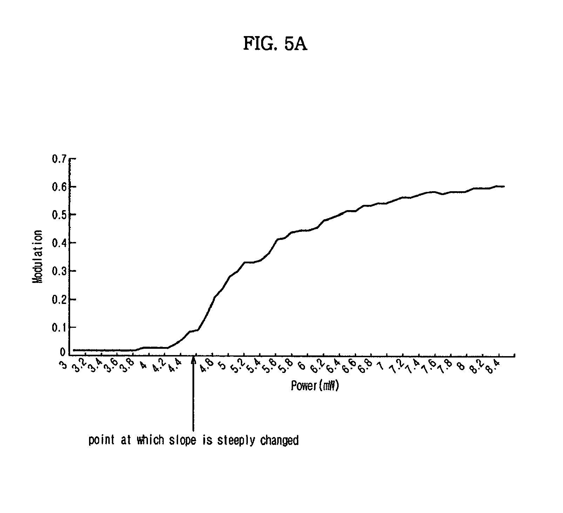

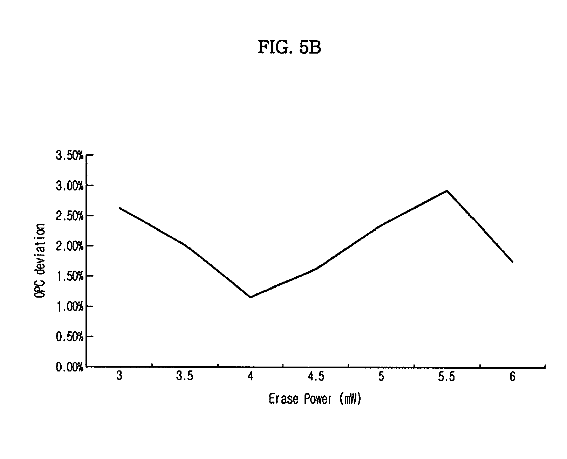

3A and 3B, FIGS. 4A and 4B, and FIGS. 5A and 5B. In each of FIGS. 3A, 4A and 5A, the x-axis denotes power applied to a laser diode (LD) of the optical pick-up 2 to adjust an amount of light incident on the optical disc, and the y-axis denotes modulations obtained relative to the power applied to the LD. Also, in each of FIGS. 3B, 4B and 5B, the x-axis denotes power used as an erasing power and the y-axis denotes deviation of an OPC performance that results when OPC is performed after an area to perform OPC is erased using the erase power. FIGS. 3A, 4A, and 5A generally correspond to FIGS. 3B, 4B, and 5B, respectively.

When an optical disc such as 10 is inserted and then a command indicating that data to be recorded on the inserted optical disc is input to the controller 30 in operation S210, the controller 30 controls the optical pick-up 12, etc. to search or locate the power calibration area (PCA) in operation S220. As described above, it is preferable to erase the PCA, when all of the PCA is full of the test data such that there is no recordable area, or even if the PCA is partially full of test data, so as to produce a highly reliable result of the OPC. Accordingly, a process for calculating an optimal erase power is performed.

First, a test data is recorded in a certain part of an optical disc, which is referred to as a PCA, while a certain recording power is changed or varied, in operation S230. When the recording power is changed or varied, modulation m of a test data recorded in the optical disc is changed or varied. The modulation m is expressed by the following equation.

$$m=(Imax-Imin)/Imax,$$

where Imax denotes an amplitude of an RF signal for a land part among the optical signals, and (Imax-Imin) denotes an amplitude of a playback RF signal.

More specifically, when the recording power is reduced, the amplitude of the playback RF signal is also decreased, thereby decreasing the modulation m. On the other hand, when the recording power is increased, the modulation m is also increased.

The modulation m, which is obtained while the recording power is changed or varied, is stored in the storage unit 32. The obtained modulation m is used to calculate a power-to-modulation curve with respect to the varied power in operation S240. The stored modulation m is then referred to by the controller 30 when the controller 30 searches for a part of the modulation curve (also referred to as a power-to-modulation curve) where modulation m is steeply changing (e.g. where the slope of the power-to-modulation curve begins to be steep) in operation S250. The portion where the modulation m is steeply changing can be determined by comparing the modulation m relative to one or more reference values. For example, a part of the modulation curve where modulation m is steeply changing, can be searched or detected as a modulation difference corresponding to each recording power that results when the recording power is increased by a particular amount and comparing the modulation difference with a reference value. The proper reference value can be set based on experimentation. In another example, since the modulation is almost zero when a recording power is relatively small, an appropriate reference value may be set as a value just above the low value of modulation. After that, when the modulation corresponding to the recording power exceeds the reference value, such a modulation point can be determined as a part in which modulation is steeply changed. There are many ways to find the modulation as described above.

As shown in FIGS. 3A, 4A, and 5A, the modulation curves remain almost at zero until the power-to-modulation curves begin to steeply increase at a certain power. The abrupt increase of the modulation may be interpreted as pits starting to be formed in an optical disc. Namely, such a state can be determined as a point when data starts to be recorded on the optical disc. The power-to-modulation curves begin to level off at high recording powers. In various aspects of the present invention, an initial recording power applied to begin obtaining the power-to-modulation curves may be any power value, or a power value provided by a disc or disc apparatus manufacturers. Also, the initial recording power may be any number below or above the provided power value. In other words, application of the initial recording power need not begin at zero.

FIGS. 3B, 4B, and 5B show respective OPC deviations relative to the powers used in FIGS. 3A, 4A, and 5A, respectively. FIGS. 3B, 4B, and 5B enable one to generally confirm that the optimal erase power should be set at a power corresponding to where a modulation m is steeply changing in a power-to-modulation curve. As shown in FIGS. 3B, 4B, and 5B, it is appreciated that the OPC deviations are relatively small in parts where power (designated as erase power) is relatively very small (for example, below about 1.5 mW of power in FIG. 3B), where modulations corresponding to the OPC deviations steeply increase (for example, between about 3 and 3.75 mW of power in FIG. 3B), and where the erase power is relatively very large (for example, about 4 mW of power in FIG. 3B). However, among the three possible choices, power corresponding to the part where the erase power is relatively very small cannot be used as an optimal erase power since data of the PCA in the part in which the erase power is relatively very small is not erased. Further, a portion where power corresponding to the part where modulation corresponding to the OPC deviations is large cannot be used as an optimal erase power because the large applied voltage makes the optical disc apparatus including an optical pick-up 12, such as an LD, etc., unstable.

Therefore, as shown in FIGS. 3A to 5B, a proper portion of the power-to-modulation curve to use to determine the optimal erase power is where the power corresponding to the part where the steep modulation increase is found. Such a part signifies where the recording layer of the optical disc is sensitive to the power applied to that part. Therefore, using the power of that portion as the erase power for the optical disc would be effective to harmonize the recording layer of the optical disc and avoid the chance the erase power obtained is too weak or too strong.

Also, a portion of the power-to-modulation curve beyond the part where modulation begins to be steeply changing exhibits a large modulation change relative to a small change of power for an optical disc. Therefore, when power corresponding to such a part is used as the erase power, OPC deviation is large and problematic. Therefore, it is preferable to use an erase power which is found between the part of the power-to-modulation curve where the modulation is steeply or abruptly changed and a part of the curve which is obtained when the abrupt change point is multiplied by a certain coefficient less than 1. Such results in obtaining the optimal erase power to obtain a preferable OPC result in operation S260.

Afterwards, the OPC is performed in operation 270 after erasing the PCA using the erase power obtained through the above-described processes. For example, the OPC operation records test data, then reproduces the recorded data to detect the optimal recording power by repeatedly performing the OPC. Once the optimal recording power is detected, then the detected optimal recording power is used to set various parameters based on the detected optimal recording power in operation S280. When the optimal recording power is detected, data recording begins using the detected power in operation S290.

While not required in all aspects, elements of the method can be implemented as software and/or firmware for use with one or more processors and/or computers. Moreover a processor and/or computer readable medium maybe encoded with computer and/or processor-executable instructions for performing the method.

As described above, the method to determine an optimal erase power according to aspects of the present invention can efficiently determine the optimal erase power to perform the optimal power calibration (OPC) in an optimum state.

Also, as a power calibration area (PCA) is efficiently erased, deviation between the OPC performance results can be reduced such that recording quality of an optical disc can be enhanced.

In addition, as an erasing operation is performed with a proper erase power, damage of optical discs can be minimized.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method to determine an optimal erase power in an optical disc apparatus in an erasing operation before performing an optimum power calibration (OPC) for detecting an optimal recording power of an optical disc, the method comprising:

   acquiring a power-to-modulation curve, in which applied power is changed to adjust an amount of light which is incident on the optical disc; calculating an amount of change of modulation according to the change of the power in the power-to-modulation curve; and setting the optimal erase power using the calculated change amount of the modulation.

2. The method as set forth in claim 1, wherein the acquiring operation further includes recording a test data in a certain part of the optical disc, wherein the power-to-modulation curve is acquired as the recorded test data is played back.

3. The method as set forth in claim 2, wherein the test data is recorded in the certain part of the optical disc while the applied power is sequentially changed by a certain amount.

4. The method as set forth in claim 2 or 3, wherein the certain part of the optical disc is a power calibration area (PCA) formed on the optical disc.

5. The method as set forth in any of the preceding claims, wherein the setting operation comprises setting the optimal erase power as a power at a portion of the power-to-modulation curve which immediately precedes a portion where an amount of change of modulation is the largest.

6. The method as set forth in claim 5, wherein the portion where the amount of change of modulation is the largest is a portion where an amount of change of modulation has the largest increase in the power-to-modulation curve, wherein the optimal erase power is set in a power range between a power which immediately precedes the portion where the amount of change of modulation is the largest, and a power which is obtained by multiplying the power that precedes the portion by a predetermined coefficient.

7. The method as set forth in any of the claims 1-6, wherein the modulation m is expressed as:

$$m=(lmax-lmin)/lmax,$$

where Imax is an amplitude of an RF signal for a land part among optical signals, and (Imax-Imin) is an amplitude of a playback RF signal.

8. A method to determine an optimal erase power in an optical disc apparatus in an erasing operation before performing optimum power calibration (OPC) for detecting an optimal recording power of an optical disc, the method comprising:

recording a test data on a certain part of the optical disc;
detecting a power applied to a laser diode at a point when the test data starts to be recorded on the certain part of the optical disc;
setting a certain range including the detected power as the optimal erase power.

9. The method as set forth in claim 8, wherein the test data is recorded as the applied power of the laser diode is changed.

10. The method as set forth in claim 8 or 9, wherein the power at a point when the test data starts to be recorded on the certain part of the optical disc is detected using a power-to-modulation curve.

11. The method as set forth in claim 10, wherein the modulation m is expressed as:

$$m = (Imax - Imin)/Imax,$$

where Imax is an amplitude of an RF signal for a land part among optical signals, and (Imax-Imin) is an amplitude of a playback RF signal.

12. The method as set forth in claim 10 or 11, wherein the power at the point when the test data starts to be recorded on the certain part of the optical disc is a power at a portion which immediately precedes a portion where a slope of the power-to-modulation curve is steeply changed.

13. The method as set forth in any of the claims 8-12, wherein the certain part of the optical disc is a power calibration area (PCA) formed on the optical disc.

14. The method as set forth in any of the claims 8-13, wherein the certain range including the detected power is between the detected power and a power which is obtained by multiplying the detected power by a predetermined coefficient.

15. An optical disc apparatus to perform the method of claim 1.

16. An optical disc apparatus to perform the method of claim 8.

17. A method to determine an optimal erase power in an optical disc apparatus, comprising:

obtaining a power-to-modulation relation by changing an applied power and detecting a resultant modulation; and
setting an optimal erase power based on the obtained power-to-modulation relation.

18. The method as set forth in claim 17, wherein the resultant modulation is expressed as:

$$m = (Imax - Imin)/Imax,$$

where Imax is an amplitude of an RF signal for a land part among optical signals, and (Imax-Imin) is an amplitude of a playback RF signal.

19. The method as set forth in claim 17 or 18, further comprising using the optimal erase power to erase data on a surface of an optical disc.

20. The method as set forth in any of the claims 17-19, further comprising performing an optimum power calibration (OPC) to determine an optimal recording power after setting the optimal erase power.

21. A method to determine an optimal erase power for an optical disc using an optical disc apparatus, comprising:

setting an optimal erase power based on an obtained power-to-modulation relation; and
prior to performing an optimal power calibration (OPC), erasing a portion of the optical disc where the optimal power calibration (OPC) is to be performed using the set optimal erase power to increase the reliability of the OPC result.

22. The method as set forth in claim 21, wherein the erasing of the portion of the disc is performed to harmonize the portion of the optical disc.

23. The method as set forth in claim 21 or 22, wherein the optimal erase power is set at a power where a slope of the obtained power-to-modulation relation is greater than a predetermined value.

24. The method as set forth in any of the claims 21-23, wherein the optimal erase power is set at a power where a modulation corresponding to a power exceeds a predetermined value.

FIG. 1

FIG. 2

```
                          ┌─────────┐
                          │  start  │
                          └─────────┘
                               │
                               ▼
S210 ──┤  ┌──────────────────────────────────────────────┐
          │       input  'record start command'          │
          └──────────────────────────────────────────────┘
                               │
                               ▼
S220 ──┤  ┌──────────────────────────────────────────────┐
          │               search PCA area                │
          └──────────────────────────────────────────────┘
                               │
                               ▼
S230 ──┤  ┌──────────────────────────────────────────────┐
          │       record test data with change of power   │
          └──────────────────────────────────────────────┘
                               │
                               ▼
S240 ──┤  ┌──────────────────────────────────────────────┐
          │   calculate modulation curve with respect to power │
          └──────────────────────────────────────────────┘
                               │
                               ▼
S250 ──┤  ┌──────────────────────────────────────────────┐
          │  search power at point on calculated modulation curve, │
          │      in which modulation curve is steep        │
          └──────────────────────────────────────────────┘
                               │          ⌐ erase
                               ▼
S260 ──┤  ┌──────────────────────────────────────────────┐
          │      calculate optimal ~~DC eraser~~ power    │
          └──────────────────────────────────────────────┘
                               │
                               ▼
S270 ──┤  ┌──────────────────────────────────────────────┐
          │      perform OPC after erasing PCA area       │
          └──────────────────────────────────────────────┘
                               │
                               ▼
S280 ──┤  ┌──────────────────────────────────────────────┐
          │           set optimal power of OPC            │
          └──────────────────────────────────────────────┘
                               │
                               ▼
S290 ──┤  ┌──────────────────────────────────────────────┐
          │                start record                  │
          └──────────────────────────────────────────────┘
                               │
                               ▼
                          ┌─────────┐
                          │   end   │
                          └─────────┘
```

FIG. 3A

point at which slope is steeply changed

FIG. 3B

FIG. 4A

point at which slope is steeply changed

FIG. 4B

FIG. 5A

point at which slope is steeply changed

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200522830